# EUROPEAN PATENT APPLICATION

(11) **EP 3 960 306 A1**
(43) Date of publication of application: **02.03.2022**
(21) Application number: 21193568.9
(22) Date of filing: 27.08.2021
(51) Int. Cl.: B05D 1/00, B05D 7/00, C08F 283/00, C08F 290/14, C08G 18/08, C08G 18/12, C08G 18/28, C08G 18/34, C08G 18/42, C08G 18/66, C08G 18/75, C08G 18/80, C08L 75/04, C09D 175/04, C09D 175/06

(54) **TOP COAT COMPOSITION**

(30) Priority: 31.08.2020 US 202063072674 P
(71) Applicant: Axalta Coating Systems GmbH, 4057 Basel (CH)
(72) Inventor: Flosbach, Carmen, 42287 Wuppertal (DE); Istivan, Stephen, Havertown, 19083 (US); al-Badri, Zoha, West Grove, 19390 (US); Goff, Meagan Douple, Philadelphia, 19147 (US); Dreger, Katharina, 40593 Duesseldorf (DE)
(74) Representative: LKGlobal UK Ltd.

(57) **Abstract**

Waterborne top coat compositions, processes for preparing such compositions, and methods for forming top coats on substrates are provided. In an embodiment, a waterborne top coat composition includes water, pigment(s) and resin solids. The resin solids comprise about 60 to 100 wt.% of binder solids and 0 to about 40 wt.% of crosslinker solids, the binder solids comprising about 1 to about 40 wt.% of a urethanized polyester/(meth)acryl copolymer hybrid binder having a hydroxyl number of about 30 to about 200 mg KOH/g and a carboxyl number of about 8 to about 50 mg KOH/g, and about 60 to about 99 wt.% of one or more additional binders, the sum of the respective wt.% in each case equaling 100 wt.%.

## Description

### CROSS-REFERENCE TO RELATED APPLICATION

This application claims the benefit of U.S. Provisional Application No. 63/072,674, filed August 31, 2020 which is hereby incorporated in its entirety by reference.

### TECHNICAL FIELD

The technical field generally relates to top coat compositions for coating substrates, and more particularly relates to waterborne top coat compositions comprising a hydroxyl-functional urethanized polyester/(meth)acryl copolymer hybrid binder, and to processes for preparing such compositions and to forming the top coat layer of a base coat/top coat multi-layer coating.

### BACKGROUND

Multi-layer coatings of the color- and/or special effect-imparting top coat/outer protective and gloss-imparting top coat type are state of the art in the field of automotive coating, which includes automotive refinish coating as well as automotive OEM (original equipment manufacturer) coating of vehicles and vehicle parts. It is also state of the art to apply the top coat layer of said multi-layer coatings from environmentally-friendly waterborne top coat compositions.

In certain applications, it is desirable to provide the top coat with an increased solids content. For example, a highly pigmented top coat may have an increased solids content. However, top coats having an increased solids content may have poor application characteristics. For example, top coats having an increased solids content may not exhibit an even flow out after spraying, and may result in an "orange peel" surface or sagging on a vertical surface. Specifically, a high level of solids can result in sagging of the paint layer as it dries into a coating.

There is still a need for the development of waterborne top coat compositions with increased solids content and improved stability, such as improved sag resistance. Further, there is a need for the development of waterborne top coat compositions with reduced haze. This is particularly true with regard to aqueous effect top coat compositions, especially aqueous metallic top coat compositions. Waterborne top coat compositions with a tendency towards instability often exhibit an undesired color shift over time, especially in case of aqueous OEM top coat compositions which are typically conveyed in circulating lines.

### SUMMARY

Waterborne top coat compositions, processes for preparing such compositions, and methods for forming top coats on substrates are provided. In an embodiment, a waterborne top coat composition includes water, pigment(s) and resin solids. The resin solids comprise about 60 to 100 wt.% of binder solids and 0 to about 40 wt.% of crosslinker solids, the binder solids comprising about 1 to about 40 wt.% of a urethanized polyester/(meth)acryl copolymer hybrid binder having a hydroxyl number of about 30 to about 200 mg KOH/g and a carboxyl number of about 8 to about 50 mg KOH/g, and about 60 to about 99 wt.% of one or more additional binders, the sum of the respective wt.% in each case equaling 100 wt.%.

In another embodiment, a method for forming a top coat on a substrate is provided. The method includes spray-applying a waterborne top coat composition on the substrate to form a top coat layer. The waterborne top coat composition comprises water, pigment(s) and resin solids, with the resin solids comprising about 60 to 100 wt.% of binder solids and 0 to about 40 wt.% of crosslinker solids, and the binder solids comprising about 1 to about 40 wt.% of a urethanized polyester/(meth)acryl copolymer hybrid binder having a hydroxyl number of about 30 to about 200 mg KOH/g and a carboxyl number of about 8 to about 50 mg KOH/g, and about 60 to about 99 wt.% of one or more additional binders, the sum of the respective wt.% in each case equaling 100 wt.%. The method further includes curing the top coat layer to form a cured top coat.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### DETAILED DESCRIPTION

The following detailed description is merely exemplary in nature and is not intended to limit the compositions and methods as described herein. Furthermore, there is no intention to be bound by any theory presented in the preceding background or summary or in the following detailed description.

As used herein, "a," "an," or "the" means one or more unless otherwise specified. The term "or" can be conjunctive or disjunctive. Open terms such as "include," "including," "contain," "containing" and the like mean "comprising." In certain embodiments, numbers in this description indicating amounts, ratios of materials, physical properties of materials, and/or use are may be understood as being modified by the word "about". The term "about" as used in connection with a numerical value and the claims denotes an interval of accuracy, familiar and acceptable to a person skilled in the art. In general, such interval of accuracy is ±10%. All numbers in this description indicating amounts, ratios of materials, physical properties of materials, and/or use may be understood as being modified by the word "about" or may be understood as being not modified by the word "about". As used herein, the "%" or "percent" described in the present disclosure refers to the weight percentage unless otherwise indicated.

As noted above, a waterborne top coat composition is provided herein. The waterborne top coat composition has a resin solids comprising about 60 to 100 wt. % (weight %) of binder solids and 0 to about 40 wt. % of crosslinker solids, the binder solids comprising about 1 to about 40 wt. % of a urethanized polyester/(meth)acryl copolymer hybrid binder having a hydroxyl number of about 30 to about 200 mg KOH/g and a carboxyl number of about 8 to about 50 mg KOH/g, and about 60 to about 99 wt. % of one or more further binders, the sum of the respective wt. % in each case equaling 100 wt. %.

In exemplary embodiments, the urethanized polyester/(meth)acryl copolymer hybrid binder is formed by first preparing a polymer with good emulsifying properties, then inverting it to a secondary dispersion and using as a supporting resin/surfactant for emulsion polymerization (25-80% of supporting resin). In exemplary embodiments, the supporting resin is urethanized polyester resin. Thus, the urethanized polyester is neutralized and used in the second step as supporting resin for the emulsion polymerisation. In an exemplary embodiment, the acrylic part of the hybrid resin is without OH-functionality. In an exemplary process, monomers are fed neat, without surfactant. In exemplary embodiments, the core may be cross-linked or not cross-linked. It is contemplated that a small amount of glycidyl methacrylate (GMA) may be used to chemically connect the core and shell by reacting with the acid functionality of the shell.

Thus, an exemplary process for forming the supporting resin urethanized polyester dispersion includes a first step of forming a polyurethane backbone:

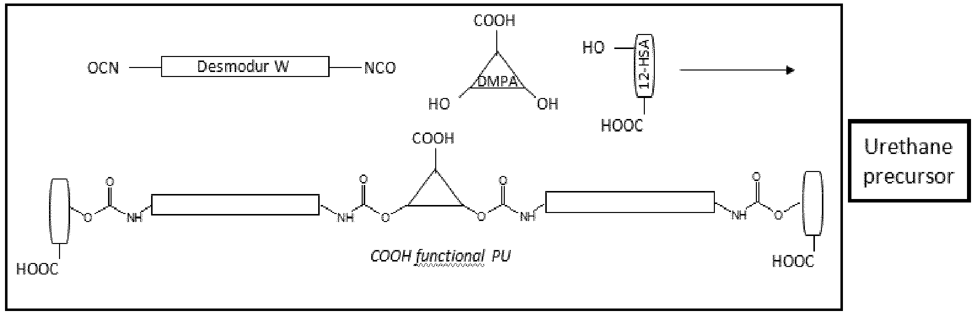

Further, the exemplary process includes forming the urethanized polyester through partial condensation:

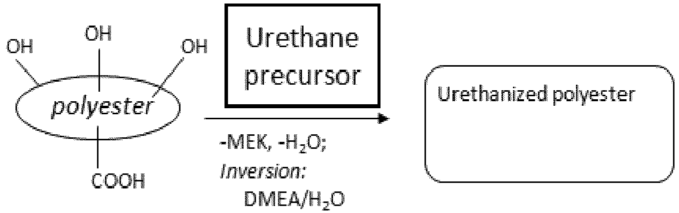

Exemplary processing is described in more detail below in relation to the Examples. As noted above, a waterborne top coat composition includes the urethanized polyester/(meth)acryl copolymer hybrid binder.

### Water

An exemplary waterborne top coat composition has a total water content of at least 0.1 wt.%, such as at least 0.5 wt.%, for example at least 1 wt.%, such as at least 1.5 wt.%, for example at least 2 wt.%, such as at least 2.5 wt.%, for example at least 5 wt.%, such as at least 10 wt.%, for example at least 15 wt.%, such as at least 20 wt.%, for example at least 25 wt.%, such as at least 30 wt.%, for example at least 35 wt.%, such as at least 40 wt.%, for example at least 45 wt.%, such as at least 50 wt.%, for example at least 55 wt.%, such as at least 60 wt.%, for example at least 65 wt.%, such as at least 70 wt.%. An exemplary waterborne top coat composition has a total water content of at most 75 wt.%, such as at most 70 wt.%, for example at most 65 wt.%, such as at most 60 wt.%, for example at most 55 wt.%, such as at most 50 wt.%, for example at most 45 wt.%, such as at most 40 wt.%, for example at most 35 wt.%, such as at most 30 wt.%, for example at most 25 wt.%

### Total solids

In exemplary embodiments, the waterborne top coat composition has a selected total solids content. The total solids content is based on the total weight of the waterborne top coat composition. An exemplary waterborne top coat composition has a total solids content of at least 30 wt.%; such as at least 35 wt.%; for example at least 36 wt.%; such as at least 37 wt.%; for example at least 38 wt.%; such as at least 39 wt.%; for example at least 40 wt.%; such as at least 41 wt.%; for example at least 42 wt.%; such as at least 43 wt.%; for example at least 44 wt.%; such as at least 45 wt.%; for example at least 46 wt.%; such as at least 47 wt.%; for example at least 48 wt.%; such as at least 49 wt.%; for example at least 50 wt.%. Further, an exemplary waterborne top coat composition has a total solids content of at most 70 wt.%, for example at most 65 wt.%; such as at most 60 wt.%; for example at most 55 wt.%; such as at most 54 wt.%; for example at most 53 wt.%; such as at most 52 wt.%; for example at most 51 wt.%; such as at most 50 wt.%; for example at most 49 wt.%; such as at most 48 wt.%; for example at most 47 wt.%; such as at most 46 wt.%; for example at most 45 wt.%; such as at most 44 wt.%; for example at most 43 wt.%; such as at most 42 wt.%; for example at most 41 wt.%; such as at most 40 wt.%.

### Total Pigment Content

In exemplary embodiments, the waterborne top coat composition has a selected total pigment content, which may be formed from one or more pigments. The total pigment content is based on the total weight of the waterborne top coat composition. An exemplary waterborne top coat composition has a total pigment content of at least 1 wt.%; such as at least 2 wt.%; for example at least 3 wt.%; such as at least 4 wt.%; for example at least 5 wt.%; such as at least 6 wt.%; for example at least 7 wt.%; such as at least 8 wt.%; for example at least 9 wt.%; such as at least 10 wt.%; for example at least 11 wt.%; such as at least 12 wt.%; for example at least 13 wt.%; such as at least 14 wt.%; for example at least 15 wt.%; such as at least 16 wt.%; for example at least 17 wt.%; such as at least 18 wt.%; for example at least 19 wt.%; such as at least 20 wt.%. Further, an exemplary waterborne top coat composition has a total pigment content of at most 30 wt.%; such as at most 25 wt.%; for example at most 22 wt.%; such as at most 21 wt.%; for example at most 20 wt.%; such as at most 19 wt.%; for example at most 18 wt.%; such as at most 17 wt.%; for example at most 16 wt.%; such as at most 15 wt.%; for example at most 14 wt.%; such as at most 13 wt.%; for example at most 12 wt.%; such as at most 11 wt.%; for example at most 10 wt.%; such as at most 9 wt.%; for example at most 8 wt.%; such as at most 7 wt.%; for example at most 6 wt.% ; such as at most 5 wt.%; for example at most 4 wt.%.

### Resin Solids

An exemplary waterborne top coat composition has a resin solids content, based on a total weight of the waterborne top coat composition, of at least 10 wt.%, such as at least 15 wt. %; for example at least 20 wt. %; such as at least 25 wt. %; for example at least 30 wt. %; such as at least 35 wt. %. An exemplary waterborne top coat composition has a resin solids content, based on a total weight of the waterborne top coat composition, of at most 40 wt. %, such as at most 35 wt. %; for example at most 30 wt. %; such as at most 25 wt. %; for example at most 20 wt. %; such as at most 15 wt. %.

In an exemplary waterborne top coat composition, the binder solids content in the resin solids is at least 60 wt.%, such as at least 65 wt. %; for example at least 70 wt. %; such as at least 75 wt. %; for example at least 80 wt. %; such as at least 85 wt. %; for example at least 90 wt. %; such as at least 95 wt. %. In an exemplary waterborne top coat composition, the binder solids content in the resin solids is at most 100 wt.%, such as at most 95 wt. %; for example at most 90 wt. %; such as at most 85 wt. %; for example at most 80 wt. %; such as at most 75 wt. %; for example at most 70 wt. %; such as at most 65 wt. %.

In an exemplary waterborne top coat composition, the crosslinker solids content in the resin solids is at least 0 wt.%, such as at least 5 wt. %; for example at least 10 wt. %; such as at least 15 wt. %; for example at least 20 wt. %; such as at least 25 wt. %; for example at least 30 wt. %; such as at least 35 wt. %. In an exemplary waterborne top coat composition, the crosslinker solids content in the resin solids is at most 40 wt.%, such as at most 35 wt. %; for example at most 30 wt. %; such as at most 25 wt. %; for example at most 20 wt. %; such as at most 15 wt. %; for example at most 10 wt. %; such as at most 5 wt. %.

### Binder Solids

In an exemplary waterborne top coat composition, the urethanized polyester/(meth)acryl copolymer hybrid binder content in the binder solids is at least 1 wt.%; such as at least 2 wt.%; for example at least 3 wt.%; such as at least 4 wt.%; for example at least 5 wt.%; such as at least 8 wt.%; for example at least 10 wt.%; such as at least 15 wt.%; for example at least 20 wt.%; such as at least 25 wt.%; for example at least 30 wt.%; such as at least 35 wt.%. In an exemplary waterborne top coat composition, the urethanized polyester/(meth)acryl copolymer hybrid binder content in the binder solids is at most 40 wt.%; such as at most 39 wt.%; for example at most 38 wt.%; such as at most 37 wt.%; for example at most 35 wt.%; such as at most 32 wt.%; for example at most 30 wt.%; such as at most 25 wt.%; for example at most 20 wt.%; such as at most 15 wt.%; for example at most 10 wt.%; such as at most 5 wt.%; for example at most 1 wt.%. In exemplary embodiments, one or more additional binders form the remainder of the binder solids.

### Urethanized Polyester/(Meth)Acryl Copolymer Hybrid Binder

In an exemplary waterborne top coat composition, the urethanized polyester part content in the urethanized polyester/(meth)acryl copolymer hybrid binder is at least 10 wt.%; such as at least 15 wt.%; for example at least 20 wt.%; such as at least 22.5 wt.%; for example at least 25 wt.%; such as at least 27.5 wt.%; for example at least 30 wt.%; such as at least 32.5 wt.%; for example at least 35 wt.%; such as at least 37.5 wt.%; for example at least 40 wt.%; such as at least 45 wt.%; for example at least 50 wt.%; such as at least 55 wt.%; for example at least 60 wt.%; such as at least 65 wt.%; for example at least 70 wt.%; such as at least 75 wt.%. In an exemplary waterborne top coat composition, the urethanized polyester part content in the urethanized polyester/(meth)acryl copolymer hybrid binder is at most 80 wt.%; such as at most 75 wt.%; for example at most 70 wt.%; such as at most 65 wt.%; for example at most 60 wt.%; such as at most 55 wt.%; for example at most 50 wt.%; such as at most 45 wt.%; for example at most 40 wt.%; such as at most 35 wt.%; for example at most 30 wt.%. In exemplary embodiments, a (meth)acryl copolymer part forms the remainder of the urethanized polyester/(meth)acryl copolymer hybrid binder.

In an exemplary embodiment, the urethanized polyester/(meth)acryl copolymer hybrid binder is obtained by free-radical copolymerization of free-radically copolymerizable olefinically unsaturated monomers comprising (meth)acryl compounds in the presence of an aqueous dispersion of a urethanized polyester as described below. Further, the exemplary urethanized polyester is an esterification product made of a polyurethane resin with a carboxyl number of about 50 to about 200 mg KOH/g and a polyester polyol with a hydroxyl number of about 70 to about 300 mg KOH/g. In an exemplary embodiment, the polyurethane resin comprises a linear polyurethane resin with terminal carboxyl groups corresponding to a carboxyl number of about 50 to about 200 mg KOH/g. In an exemplary embodiment, the polyurethane resin comprises a linear polyurethane resin with terminal and lateral carboxyl groups corresponding to a total carboxyl number of about 50 to about 200 mg KOH/g. In an exemplary embodiment, the polyester polyol comprises a branched polyester polyol. In an exemplary embodiment, a proportion by weight of (meth)acryl compounds among the free-radically copolymerizable olefinically unsaturated monomers is in the range of about 50 to 100 wt.%, wherein the wt.% is based on a total weight of the free-radically copolymerizable olefinically unsaturated monomers.

In an embodiment, the urethanized polyester/(meth)acryl copolymer hybrid binder can be obtained by free-radical copolymerization of free-radically copolymerizable olefinically unsaturated monomers comprising (meth)acryl compounds (compounds having one or more (meth)acryloyl groups in the molecule) in the presence of an aqueous dispersion of a urethanized polyester which is an esterification product made of a polyurethane resin with a carboxyl number of about 50 to about 200 mg KOH/g and a polyester polyol with a hydroxyl number of about 70 to about 300 mg KOH/g.

It has been found that the waterborne top coat composition has an improved stability when compared with a similar waterborne top coat composition having a binder solids not comprising the about 1 to about 40 wt. % of the urethanized polyester/(meth)acryl copolymer hybrid binder.

The term "(meth)acryl" is used herein; it shall mean acryl and/or methacryl.

In the description and the claims a distinction is made between "solids", "resin solids", "binder solids" and "crosslinker solids" of the waterborne top coat composition contemplated herein. The term "solids" means non-volatile components. For example, the solids of a color- and/or effect-imparting waterborne top coat composition are formed by its resin solids plus pigments plus optionally present fillers (extenders) plus optionally present non-volatile additives. Resin solids means binder solids plus, if present, crosslinker solids. Binder solids means the solids contribution of one or more binders. Crosslinker solids means the solids contribution of one or more crosslinkers. The solids of a volatile matter-containing coating composition or a coating intermediate like, for example, a binder solution or a binder dispersion, can be determined in accordance with DIN EN ISO 3251 (60 minutes 150°C).

The solids of the waterborne top coat composition contemplated herein comprise any non-volatile constituents including the resin solids and any further components making a solids contribution like pigments and, if present, fillers and non-volatile additives.

The waterborne top coat composition contemplated herein has a solids content, for example, in the range of about 10 to about 50 wt. %.

The waterborne top coat composition contemplated herein comprises water, pigment(s) and resin solids. It may further comprise the following optional components: filler(s), organic solvent(s) and conventional additive(s). The waterborne top coat composition may have a ratio by weight of pigments to resin solids of, for example, at least 0.05:1 or at least 0.1:1 and at most 2.5:1 or at most 3:1.

The resin solids content of the waterborne top coat composition contemplated herein may range, for example, from about 10 to about 40 wt. %, wherein the wt. % is based on the total weight of the waterborne top coat composition. The resin solids composition of the waterborne top coat composition is about 60 to 100 wt. % binder solids plus 0 to about 40 wt. % crosslinker solids, wherein the sum of the wt. % totals 100 wt. %. Pigment paste resins which may be contained in the waterborne top coat composition are counted as binders. The binder solids of the waterborne top coat composition consists of about 1 to about 40 wt. % of the urethanized polyester/(meth)acryl copolymer hybrid binder and about 60 to about 99 wt. % of one or more other binders, wherein the sum of the wt. % totals 100 wt. %. In a preferred embodiment, the binder solids consists of about 5 to about 25 wt. % of the urethanized polyester/(meth)acryl copolymer hybrid binder and about 75 to about 95 wt. % of one or more other binders, the sum of the wt. % equaling 100 wt. %.

The urethanized polyester/(meth)acryl copolymer hybrid binder has a hydroxyl number of about 30 to about 200 mg KOH/g, preferably about 40 to about 150 mg KOH/g and a carboxyl number of about 8 to about 50 mg KOH/g, preferably about 10 to about 40 mg KOH/g. Its weight average molar mass may be, for example, about 5000 to about 10000.

The term "weight average molar mass" is used herein. It shall mean the weight average molar mass determined by gel permeation chromatography (GPC; divinylbenzene-crosslinked polystyrene as the immobile phase, tetrahydrofuran as the liquid phase, polystyrene standards).

As already mentioned, the urethanized polyester/(meth)acryl copolymer hybrid binder can be obtained by free-radical copolymerization of free-radically copolymerizable olefinically unsaturated monomers comprising (meth)acryl compounds in the presence of an aqueous dispersion of an esterification product made of a polyurethane resin with a carboxyl number of about 50 to about 200 mg KOH/g and a polyester polyol with a hydroxyl number of about 70 to about 300 mg KOH/g.

The urethanized polyester/(meth)acryl copolymer hybrid binder comprises a urethanized polyester part and a (meth)acryl copolymer part. The urethanized polyester part may make up, for example, about 25 to about 45 wt. % of the urethanized polyester/(meth)acryl copolymer hybrid binder, while the remaining wt. % are made up by the (meth)acryl copolymer part. The weight ratio between (meth)acryl copolymer part and urethanized polyester part in the urethanized polyester/(meth)acryl copolymer hybrid binder is formed by the ratio of the total weight of the olefinically unsaturated monomers employed in the aforedescribed free-radical copolymerization reaction and the total weight of the urethanized polyester within the aqueous urethanized polyester dispersion in the presence of which the olefinically unsaturated monomers are copolymerized.

The urethanized polyester part of the urethanized polyester/(meth)acryl copolymer hybrid binder is a urethanized polyester in the form of an esterification product made of a polyurethane resin with a carboxyl number of about 50 to about 200 mg KOH/g and a polyester polyol with a hydroxyl number of about 70 to about 300 mg KOH/g. The polyurethane resin may have a weight average molar mass of, for example, about 3000 to about 9000, and the polyester polyol may have a carboxyl number of, for example, 0 to about 30 mg KOH/g and a weight average molar mass of, for example, about 2000 to about 4000.

Polyurethane resins with a carboxyl number of about 50 to about 200 mg KOH/g can be produced, as is known to a person skilled in the art, by reacting polyisocyanates with hydroxycarboxylic acids and, optionally, polyols at a stoichiometric ratio of isocyanate groups and hydroxyl groups.

Linear polyurethane resins with terminal carboxyl groups corresponding to a carboxyl number of about 50 to about 200 mg KOH/g are preferred; especially preferred are linear polyurethane resins with terminal and lateral carboxyl groups corresponding to a total carboxyl number of about 50 to about 200 mg KOH/g. Polyurethane resins of this type can be produced by reacting diisocyanates with monohydroxycarboxylic acids and diols or with monohydroxycarboxylic acids and dihydroxycarboxylic acids and, optionally, although less preferred, diols. Said addition reactions can be carried out in the absence or in the presence of an organic solvent (mixture) which is inert to isocyanate groups. Generally, the addition reactions are carried out at a temperature ranging from about 60 to about 100° C.

Examples of polyisocyanates which may be used to produce the carboxyl-functional polyurethane resins include polyisocyanates having two or more than two free isocyanate groups corresponding to a content of free isocyanate of, for example, from about 10 to about 50 wt. %.

Examples of suitable polyisocyanates include diisocyanates, such as, phenylene, toluylene, xylylene, naphthylene or diphenylmethane diisocyanate, 1,6-hexane diisocyanate, dicyclohexylmethane diisocyanate, isophorone diisocyanate, trimethylhexane diisocyanate, cyclohexane diisocyanate, cyclohexanedimethylene diisocyanate and tetramethylenexylylene diisocyanate.

Examples of polyisocyanates having more than two isocyanate groups comprise trisisocyanatononane and polyisocyanates derived from the diisocyanates stated in the preceding paragraph. Such examples comprise oligomers of the diisocyanates or isocyanurate, uretdione or biuret derivatives of the diisocyanates or isocyanate-functional adducts of the diisocyanates and compounds having at least three groups containing active hydrogen per molecule, in particular, polyols, polyamines and/or aminoalcohols, such as, for example, trimethylolpropane, glycerol, diethylene triamine and 1:1-adducts of dialkanolamines and cyclic carbonate.

Examples of hydroxycarboxylic acids which may be used to produce the carboxyl-functional polyurethane resins include monohydroxycarboxylic acids, such as, glycolic acid (hydroxyacetic acid), malic acid, 12-hydroxystearic acid, 4-hydroxybenzoic acid, citric acid, or 1:1-adducts of monoepoxy compounds and dicarboxylic acids, for example, corresponding adducts of glycidyl ethers or glycidyl esters, such as, glycidyl versatate with dicarboxylic acids, and polyhydroxycarboxylic acids, such as, tartaric acid, dimethylolpropionic acid and dimethylolbutyric acid.

Examples of polyols which may be used to produce the carboxyl-functional polyurethane resins include diols, such as, ethylene glycol, the isomeric propane- and butanediols, 1,5-pentanediol, 1,6-hexanediol, 1,10-decanediol, 1,12-dodecanediol, neopentyl glycol, butylethylpropanediol, trimethylhexane diol, diethylene glycol, triethylene glycol, tripropylene glycol, the isomeric cyclohexanediols, the isomeric cyclohexanedimethanols, hydrogenated bisphenols, tricyclodecanedimethanol, dimer fatty alcohol, bisphenol A, and polyols with more than two hydroxyl groups, such as, glycerol, trimethylolpropane, trimethylolethane, pentaerythritol, dipentaerythritol, ditrimethylolpropane, sorbitol and mannitol.

Polyester polyols with a hydroxyl number of about 70 to about 300 mg KOH/g and a carboxyl number of, for example, 0 to about 30 mg KOH/g can be produced by polycondensation of polyols with polycarboxylic acids or with suitable polycarboxylic acid derivatives, such as, for example, corresponding esters or anhydrides. Hydroxycarboxylic acids, monoalcohols, monocarboxylic acids and/or epoxide compounds may, optionally, be included in the polyester synthesis. Polycondensation may be carried out by the conventional methods known to the skilled person, for example, in the presence of conventional esterification catalysts and at elevated temperatures of, for example, about 180 to about 250° C, for example, in the melt. Optionally, entrainers, such as, for example, xylene, may also be used.

Examples of polyols which may be used to produce polyester polyols with a hydroxyl number of about 70 to about 300 mg KOH/g and a carboxyl number of, for example, 0 to about 30 mg KOH/g are the same as those which have been previously mentioned as examples of polyols which may be used to produce the carboxyl-functional polyurethane resins.

Examples of polycarboxylic acids which may be used to produce polyester polyols with a hydroxyl number of about 70 to about 300 mg KOH/g and a carboxyl number of, for example, 0 to about 30 mg KOH/g include dicarboxylic acids, such as, phthalic acid, isophthalic acid, terephthalic acid, tetrahydrophthalic acid, hexahydrophthalic acid, 1,3- and 1,4-cyclohexane dicarboxylic acid, succinic acid, adipic acid, sebacic acid, azelaic acid, dodecanedioic acid, maleic acid, fumaric acid, dimer fatty acids, and polycarboxylic acids with more than two carboxyl groups, such as, trimellitic acid and pyromellitic acid.

The polyester polyols with a hydroxyl number of about 70 to about 300 mg KOH/g and a carboxyl number of, for example, 0 to about 30 mg KOH/g may be linear, in which case they are polyesterdiols. However, branched polyester polyols with a hydroxyl number of about 70 to about 300 mg KOH/g and a carboxyl number of, for example, 0 to about 30 mg KOH/g are preferred.

As already mentioned, the urethanized polyester can be produced by esterifying a carboxyl-functional polyurethane with a carboxyl number of about 50 to about 200 mg KOH/g with a polyester polyol with a hydroxyl number of about 70 to about 300 mg KOH/g. A person skilled in the art knows how to carry out esterification reactions of this type; for example, these reactions may be performed under the conditions mentioned with regard to the production of polyester polyols with a hydroxyl number of about 70 to about 300 mg KOH/g and a carboxyl number of, for example, 0 to about 30 mg KOH/g.

After conclusion of the esterification reaction between the carboxyl-functional polyurethane resin and the polyester polyol, the formed urethanized polyester is, after the addition of a neutralizing agent, converted, by the addition of water, into an aqueous urethanized polyester binder dispersion with a solids content of, for example, about 35 to about 55 wt. %.

The (meth)acryl copolymer part of the urethanized polyester/(meth)acryl copolymer hybrid binder is a (meth)acryl copolymer that can be made by free-radically copolymerizing free-radically copolymerizable olefinically unsaturated monomers comprising one or more (meth)acryl compounds in the presence of an aqueous dispersion of the aforementioned esterification product, i.e. the urethanized polyester part of the urethanized polyester/(meth)acryl copolymer hybrid binder.

The free-radical copolymerization of the olefinically unsaturated monomers to form the (meth)acryl copolymer part of the urethanized polyester/(meth)acryl copolymer hybrid binder can be performed in a separate and subsequent step after the aqueous dispersion of the urethanized polyester has been formed. To this end, the olefinically unsaturated monomers comprising one or more (meth)acryl compounds can be free-radically copolymerized in the presence of the aqueously dispersed urethanized polyester. In other words, the urethanized polyester/(meth)acryl copolymer hybrid binder is a product that can be made by first esterifying said polyurethane resin with a carboxyl number of about 50 to about 200 mg KOH/g and said polyester polyol with a hydroxyl number of about 70 to about 300 mg KOH/g to produce the urethanized polyester, then converting the urethanized polyester into an aqueous dispersion in the presence of which said olefinically unsaturated monomers comprising one or more (meth)acryl compounds can then be free-radically copolymerized. The proportion by weight of (meth)acryl compounds among the free-radically copolymerizable olefinically unsaturated monomers lies in the range of about 50 to about 100 wt. %, wherein the wt. % is based on the total weight of the free-radically copolymerizable olefinically unsaturated monomers, i.e. the free-radically copolymerizable olefinically unsaturated monomers may be free of or they may comprise up to about 50 wt. % of free-radically polymerizable olefinically unsaturated monomers having no (meth)acryloyl groups.

A person skilled in the art knows how to carry out a free-radical copolymerization of this type. The olefinically unsaturated monomers comprising one or more (meth)acryl compounds can be free-radically polymerized under conventional conditions known to the person skilled in the art of a free-radical copolymerization performed in an aqueous phase with the addition of one or more initiators which are thermally dissociable into free radicals (free-radical initiators). The aqueously dispersed urethanized polyester is initially introduced into the reaction vessel, heated to the reaction temperature and then the olefinically unsaturated monomers and free-radical initiators are added. The duration of the free-radical copolymerization (time taken to apportion the olefinically unsaturated monomers plus the duration of a post-polymerization phase) is, for example, about 1 to about 10 hours. The polymerization temperature in the aqueous phase is, for example, about 50 to about 95°C. The copolymerization reaction may be initiated with conventional free-radical initiators.

The free-radical initiators are used in a conventional total quantity of, for example, about 0.2 to about 2 wt. %, relative to the weight of the olefinically unsaturated monomers and may be added contemporaneously to the apportionment of the olefinically unsaturated monomers. The free-radical initiators may be added as such, as a constituent of the olefinically unsaturated monomers or as a solution. A proportion of the free-radical initiators may, however, be initially introduced and/or added once addition of the olefinically unsaturated monomers is complete. It is also possible to add the initiators completely prior to the apportionment of the olefinically unsaturated monomers.

Examples of free-radical initiators are dialkyl peroxides, such as di-tert-butyl peroxide, dicumyl peroxide; diacyl peroxides, such as dibenzoyl peroxide, dilauroyl peroxide; hydroperoxides, such as cumene hydroperoxide, tert-butyl hydroperoxide; peresters, such as tert-butyl perbenzoate, tert-butyl per-2-ethylhexanoate; peroxy dicarbonates; perketals; ketone peroxides, such as cyclohexane peroxide, methyl isobutyl ketone peroxide and azo compounds, such as azobisisobutyronitrile; C-C-cleaving initiators, such as for example benzopinacole derivatives. Preferred are water-soluble free-radical initiators, for example, hydrogen peroxide, peroxodisulfates such as sodium, potassium and ammonium peroxodisulfate, ammonium salts of 4,4'-azobis(4-cyanopentanoic acid), 2,2'-azobis(2-methyl-N-1,1-bis(hydroxymethyl)ethyl)propionamide, 2,2'-azobis(2-methyl-N-2-hydroxyethyl)propionamide as well as conventional redox initiator systems known to the person skilled in the art, such as hydrogen peroxide/ascorbic acid optionally in combination with catalytic metal salts such as iron, copper or chromium salts.

The olefinically unsaturated monomers may be added separately or with a time delay during the copolymerization.

The olefinically unsaturated monomers are apportioned, i.e. added into the aqueously dispersed urethanized polyester initial charge, which has generally already been adjusted to the copolymerization temperature.

The olefinically unsaturated monomers may be apportioned individually, as one monomer mixture or as two or more different mixtures of only some of the monomers. It is preferred to work with a monomer mixture.

The olefinically unsaturated monomers comprise olefinically monounsaturated monomers without functional groups.

Examples of olefinically monounsaturated monomers without functional groups that can be used are (cyclo)alkyl (meth)acrylates, such as methyl (meth)acrylate, ethyl (meth)acrylate, propyl (meth)acrylate, butyl (meth)acrylate, isopropyl (meth)acrylate, isobutyl (meth)acrylate, tert-butyl (meth)acrylate, pentyl (meth)acrylate, hexyl (meth)acrylate, cyclohexyl (meth)acrylate, 2-ethylhexyl (meth)acrylate, octyl (meth)acrylate, 3,5,5-trimethylhexyl (meth)acrylate, decyl (meth)acrylate, dodecyl (meth)acrylate, hexadecyl (meth)acrylate, octadecyl (meth)acrylate, lauryl (meth)acrylate, isobornyl (meth)acrylate, and 4-tert-butyl cyclohexyl methacrylate; monovinylaromatic compounds, such as styrene, vinyltoluenes, alpha-methylstyrene, o-, m- or p-methylstyrene, 2,5-dimethylstyrene, p-methoxystyrene, and p-tert-butylstyrene; vinyl ethers; vinyl esters, such as vinyl acetate, vinyl versatate; and non-acidic alkyl and dialkyl esters of acids like crotonic, isocrotonic, vinylacetic, itaconic, maleic, fumaric and tetrahydrophthalic acid.

The olefinically unsaturated monomers may also comprise olefinically monounsaturated, free-radically copolymerizable monomers comprising functional groups such as in particular acid groups and hydroxyl groups.

Examples of olefinically monounsaturated, free-radically copolymerizable monomers with acid groups, in particular carboxyl groups are unsaturated mono- and dicarboxylic acids and semi-esters of dicarboxylic acids, such as, for example, (meth)acrylic, itaconic, crotonic, isocrotonic, aconitic, maleic and fumaric acid, semi-esters of maleic and fumaric acid, beta-carboxyethyl (meth)acrylate, adducts of hydroxyalkyl (meth)acrylates with carboxylic anhydrides, such as, for example, phthalic acid mono-2-methacryloyloxyethyl ester, and semi-esters prepared from maleic anhydride and saturated aliphatic alcohols such as, for example, ethanol, propanol, and (iso)butanol. Preferred monomer with an acid group is (meth)acrylic acid.

Examples of olefinically monounsaturated monomers with one or more hydroxyl groups are allyl alcohol, but in particular hydroxyalkyl (meth)acrylates such as, for example, hydroxyethyl (meth)acrylate, the hydroxypropyl (meth)acrylates, the hydroxybutyl (meth)acrylates, glycerol mono(meth)acrylate, adducts of (meth)acrylic acid onto monoepoxides, such as, for example, versatic acid glycidyl ester and adducts of glycidyl (meth)acrylate onto monocarboxylic acids such as, for example, acetic acid or propionic acid. Further examples are reaction products of hydroxyl-functional monomers with caprolactone.

The olefinically unsaturated monomers may also comprise small proportions of, for example, about 1 to about 8 wt. % of olefinically di- or polyunsaturated monomers such as divinylbenzene, hexanediol di(meth)acrylate, ethylene and propylene glycol di(meth)acrylate, 1,3- and 1,4-butanediol di(meth)acrylate, vinyl (meth)acrylate, allyl (meth)acrylate, diallyl phthalate, glycerol tri(meth)acrylate, trimethylolpropane tri(meth)acrylate, pentaerythritol tetra(meth)acrylate, di- and tripropylene glycol di(meth)acrylate, hexamethylene bis(meth)acrylamide and similar compounds. Further examples are compounds which may be produced by a condensation or preferably by an addition reaction of complementary compounds, which in each case, in addition to one or more olefinic double bonds, contain one or more further functional groups per molecule. The further functional groups of the individual complementary compounds comprise pairs of mutually complementary reactive groups, in particular groups which are capable of reacting with one another for the purposes of a possible condensation or addition reaction.

Examples of olefinically polyunsaturated, free-radically polymerizable monomers produced by a condensation reaction are reaction products formed from alkoxysilane-functional (meth)acrylic monomers after hydrolysis with elimination of alcohol and formation of siloxane bridges. Further examples are reaction products formed from hydroxyalkyl (meth)acrylates and olefinically unsaturated isocyanates blocked on the isocyanate group, such as isocyanatoalkyl (meth)acrylate or m-isopropenyl-alpha,alpha-dimethylbenzyl isocyanate with elimination of the blocking agent and formation of urethane groups.

Examples of olefinically polyunsaturated, free-radically polymerizable monomers produced by an addition reaction are addition products formed from hydroxyalkyl (meth)acrylates and olefinically unsaturated isocyanates, such as isocyanatoalkyl (meth)acrylate or m-isopropenyl-alpha,alpha-dimethylbenzyl isocyanate with formation of a urethane group or reaction products formed by ring-opening addition of the epoxy group of unsaturated epoxy compounds onto the carboxyl group of an unsaturated acid with formation of an ester group and a hydroxyl group, such as, for example, the addition product formed from glycidyl (meth)acrylate and (meth)acrylic acid.

The urethanized polyester/(meth)acrylic copolymer hybrid binder may be a hybrid polymer, in which the urethanized polyester and the (meth)acrylic copolymer are present in the form of an interpenetrating polymer network and/or it may take the form of a graft copolymer formed by free-radical graft copolymerization of the olefinically unsaturated monomers onto either olefinically unsaturated double bonds in the urethanized polyester, or free-radical sites formed by H abstraction on the backbone of the urethanized polyester.

The urethanized polyester/(meth)acryl copolymer hybrid binder is typically free of free and blocked isocyanate groups (isocyanate groups blocked by monofunctional blocking agents as are conventionally used for permanently or reversibly blocking isocyanate, such as monoalcohols, ketoximes, phenols, lactams, CH-acidic compounds, pyrazoles, etc.).

As has already been mentioned, the binder solids of the waterborne top coat composition contemplated herein comprises about 60 to about 99 wt. % of one or more other binders, i.e. binders that are different from the urethanized polyester/(meth)acryl copolymer hybrid binder. Such other binders are anionically and/or non-ionically stabilized aqueous binders as are conventional in the art of aqueous paint and coatings; examples include polyesters, polyurethanes, (meth)acrylic copolymer resins and/or hybrid binders derived from these classes of binders. Anionic stabilization is preferably achieved by at least partially neutralized carboxyl groups in the binder, while non-ionic stabilization is preferably achieved by lateral or terminal polyethylene oxide units in the binder. Examples of such other binders comprise resins conventionally used as binders for coating compositions, such as, for example, (meth)acrylic copolymer resins, polyester resins, polyurethane resins as well as resin hybrids of two or more of said resin types. The other binders may in particular be hydroxyl-functional.

The waterborne top coat composition contemplated herein may contain one or more conventional crosslinkers in a proportion corresponding to a solids contribution of 0 to about 40 wt. % of the resin solids of the waterborne top coat composition. Examples of such crosslinkers include aminoplast resins, interesterification crosslinkers and crosslinkers with free or reversibly blocked isocyanate groups. Examples of aminoplast resins include benzoguanamine resins and, in particular, melamine resins. Examples of interesterification crosslinkers include trisalkoxycarbonylaminotriazines. Examples of crosslinkers with free or reversibly blocked isocyanate groups include the conventional free or blocked polyisocyanate crosslinkers known as crosslinkers for coating compositions.

The waterborne top coat composition comprises one or more conventional pigments, for example, special effect pigments and/or pigments selected from among white, colored and black pigments. In other words, the waterborne top coat composition may be a solid color (color independent on the observation angle) top coat composition or, preferably, an effect color (color having a color and/or lightness flop dependent on the observation angle) top coat composition comprising one or more special effect pigments pigments, in particular, an effect color top coat composition comprising one or more metal pigments.

Examples of special effect pigments are conventional pigments which impart to a coating color flop and/or lightness flop dependent on the angle of observation, such as, non-leafing metal pigments, for example, of aluminum, copper or other metals, interference pigments, such as, for example, metal oxide-coated metal pigments, for example, iron oxide-coated aluminum, coated mica, such as, for example, titanium dioxide-coated mica, graphite effect-imparting pigments, iron oxide in flake form, liquid crystal pigments, coated aluminum oxide pigments, coated silicon dioxide pigments.

Examples of white, colored and black pigments are the conventional inorganic or organic pigments known to the person skilled in the art, such as, for example, titanium dioxide, iron oxide pigments, carbon black, azo pigments, phthalocyanine pigments, quinacridone pigments, pyrrolopyrrole pigments, and perylene pigments.

The waterborne top coat composition contemplated herein may also contain fillers, for example, in a total proportion of 0 to about 30 wt. %, relative to the resin solids content. The fillers do not constitute part of the pigment content of the waterborne top coat composition. Examples are barium sulfate, kaolin, talcum, silicon dioxide and layered silicates.

The special effect pigments are generally initially introduced in the form of a conventional commercial aqueous or non-aqueous paste, optionally, combined with preferably water-dilutable organic solvents and additives and then mixed with aqueous binder. Pulverulent special-effect pigments may first be processed with preferably water-dilutable organic solvents and additives to yield a paste.

White, colored and black pigments and/or fillers may, for example, be ground in a proportion of the aqueous binder. Grinding may preferably also take place in a special aqueous paste resin. Grinding may be performed in conventional assemblies known to the person skilled in the art. The formulation is then completed with the remaining proportion of the aqueous binder or of the aqueous paste resin.

In addition to one or more neutralizing agents, such as, in particular, amines and/or aminoalcohols, the waterborne top coat composition may comprise conventional additives, for example, in a total proportion of about 0.1 to about 10 wt. % active substance, wherein the percentage by weight is based on total waterborne top coat composition. Examples are antifoaming agents, wetting agents, adhesion promoters, catalysts, levelling agents, anticratering agents, rheology control agents, for example, thickeners, and light stabilizers, for example, UV absorbers and/or HALS-based compounds (HALS, hindered amine light stabilizers).

The waterborne top coat composition contemplated herein comprises water in a proportion of, for example, about 30 to about 75 wt. %, wherein the wt. % is based on the total weight of the waterborne top coat composition.

The waterborne top coat composition may comprise conventional organic solvents, for example, in a total proportion of preferably less than about 25 wt. %, particularly preferably, less than about 15 wt. %, wherein the percentage by weight is based on total waterborne top coat composition. These are conventional coating solvents, which may originate, for example, from the binder production or are added separately. Examples of such solvents are alcohols, for example, propanol, butanol, hexanol, 2-ethyl hexanol, benzyl alcohol, isodecanol; glycol ethers, for example, diethylene glycol di-C1-C6-alkyl ether, dipropylene glycol di-C1-C6-alkyl ether, ethoxypropanol, methoxypropanol, butyl glycol, butoxypropanol, butyl diglycol, hexyl glycol, methoxybutanol; glycol ether esters, for example, methoxypropyl acetate, butyl glycol acetate, butyl diglycol acetate; glycols, for example, ethylene glycol and/or propylene glycol, and the di- or trimers thereof; ketones, such as, methyl ethyl ketone, methyl isobutyl ketone, acetone, cyclohexanone, 4-hydroxy-4-methyl-2-pentanone; terpene, aromatic or aliphatic hydrocarbons, for example, toluene, xylene or linear or branched aliphatic C6-C12 hydrocarbons.

In an embodiment, the waterborne top coat composition contemplated herein comprises no N-alkyl pyrrolidone solvent.

The waterborne top coat composition can in particular be used to apply the top coat layer of a base coat/top coat multi-layer coating. Accordingly, also provided herein is a process for preparing a base coat/top coat multi-layer coating comprising the steps:
(1) providing a substrate to be provided with a base coat/top coat multi-layer coating,
(2) spray-applying the waterborne base coat composition in any of the aforedisclosed embodiments on said substrate to form a base coat layer,
(3) spray-applying a top coat composition on the base coat layer to form a top coat layer, and
(4) jointly curing the base coat and the top coat layers.

The process contemplated herein that comprises steps (1) to (4) may be a refinish or an OEM base coat/top coat multi-layer coating process, in particular, an automotive refinish or an automotive OEM base coat/top coat multi-layer coating process.

In step (1) of the process a substrate is provided.

In case of a refinish base coat/top coat multi-layer coating process the substrate may be a substrate provided with an original coating to be repaired or refinished. Examples of substrates include in particular automotive substrates like automobile bodies, automobile body parts or other automotive parts.

In case of an OEM base coat/top coat multi-layer coating process the substrate is typically one made by a serial production process. In case of an automotive OEM base coat/top coat multi-layer coating process typical examples of such mass-produced substrates include automotive substrates like automobile bodies, automobile body parts and other car parts like, for example, rims.

Automotive substrates can be plastics or metal substrates or so-called mixed construction substrates comprising plastics as well as metal. As already said, the automotive substrates may be automotive bodies or automotive body parts; automotive bodies can be metal substrates or mixed construction substrates, while automotive body parts can be metal substrates, plastics substrates or mixed construction substrates. Automotive plastics substrates may be uncoated or they may have a precoating like a conductive primer layer or, as already mentioned, an original coating to be repaired. Automotive metal substrates may have a precoating like a conventional primer layer, for example, an EDC primer layer, and, optionally, also a conventional primer surfacer layer, or, as already mentioned, an original coating to be repaired.

In step (2) of the process contemplated herein the waterborne base coat composition is spray-applied on the substrate provided in step (1) to form a base coat layer thereon. The spray application may be performed by any conventional spray application method; in case of OEM coating the typical spray application method is electrostatically-assisted high speed rotary atomization and it may be carried out so as to spray-apply the waterborne base coat composition in one or more than one spray passes, each of which is performed by electrostatically-assisted high speed rotary atomization.

In an embodiment A of the process, step (2) may be followed by an additional step (2') prior to step (3) being performed. In such additional step (2') the same waterborne base coat composition like that employed in step (2) is pneumatically spray-applied to form a coating layer. The base coat layers applied in steps (2) and (2') have the same solids composition and together they form the base coat layer of the base coat/top coat multi-layer coating.

In another embodiment B of the process contemplated herein, step (2) may be followed by an additional step (2") prior to step (3) being performed. Here, the waterborne base coat composition spray-applied in step (2) comprises a free polyisocyanate crosslinker, while in said additional step (2") a waterborne base coat composition which is free of free polyisocyanate crosslinker is spray-applied to form a coating layer. The waterborne base coat composition spray-applied in additional step (2") may have the same or a different color than the waterborne base coat composition spray-applied in step (2). In other words, the waterborne base coat composition spray-applied in step (2") has the same or a different pigment composition than the waterborne base coat composition spray-applied in step (2) and it does not comprise free polyisocyanate crosslinker. The base coat layer applied in step (2) and the coating layer applied in step (2") have in any case a different overall composition, but together they form the base coat layer of the base coat/top coat multi-layer coating.

In a preferred variant of said embodiment B, the waterborne base coat composition spray-applied in step (2) has the same pigment composition like the waterborne base coat composition spray-applied in step (2") and it can be made from the latter by mixing it with the free polyisocyanate crosslinker or a preparation or solution thereof. In said preferred variant of embodiment B, the base coat layer applied in step (2) and the coating layer applied in step (2") have a different overall, but same pigment composition and together they form the base coat layer of the base coat/top coat multi-layer coating.

In still another embodiment C of the process contemplated herein, step (2) may be followed by an additional step (2''') prior to step (3) being performed. Here, a different coating composition (a coating composition other than the waterborne base coat composition employed in step (2)), in particular, another waterborne base coat composition than that employed in step (2), is spray-applied in step (2''') to form a color- and/or effect imparting coating layer which is transparent or semi-transparent. In other words, the coating layer formed in step (2''') is not visually opaque and the color of the finished multi-layer coating is determined by the color contributions of the base coat layer formed in step (2) and of the coating layer formed in step (2'''). The base coat layer applied in step (2) and the coating layer applied in step (2''') together form the base coat layer of the base coat/top coat multi-layer coating.

The base coat layer is the color- and/or special effect-imparting coating layer within the multi-layer coating produced by the process contemplated herein. In other words, the multi-layer coating produced by the process may have a solid color or an effect color.

The overall film thickness of the base coat layer, which may be comprised of two or more coating layers or sublayers, may be in the range of, for example, about 7 to about 40 µm.

The film thicknesses indicated herein for coating layers refer in each case to dry film thicknesses.

Application of the waterborne base coat composition or compositions can be followed by a drying procedure, in particular a brief flash-off phase of, for example, about 30 seconds to about 30 minutes at an air temperature of about 20 to about 100° C, after which in step (3) a top coat composition is spray-applied to form the top coat layer in a film thickness of, for example, about 20 to about 60 µm or, in an embodiment, for example, about 80 to about 150 µm.

After an optional flash-off phase, the base coat and the top coat layers are jointly cured in step (4), for example, by baking for about 15 to about 45 minutes at about 40 to about 185° C object temperature, which depends, among others, on the substrate material.

### EXAMPLES

In the following various embodiments described above are further illustrated by means of examples:

### Example 1 (Preparation of an Aqueous Binder Latex)

16 pbw (parts by weight) of Rhodapex EST30 (anionic surfactant available from Rhodia; 30 wt % in water) were added to 688 pbw of deionized water. The water and surfactant charge was heated to 80° C under nitrogen atmosphere and held at that temperature throughout the reaction. A first stirred monomer emulsion consisting of 45 pbw of Rhodapex EST30, 349 pbw of deionized water, 317 pbw of methyl methacrylate, 317 pbw of butyl acrylate, 36 pbw of hydroxyethyl acrylate, 36 pbw of methacrylic acid and 7 pbw of allyl methacrylate was prepared separately. A solution of 3.2 pbw of APS (ammonium peroxodisulfate) in 100 pbw of deionized water was added and the first monomer emulsion was then added within 90 minutes to the reactants. After all of the first monomer emulsion was added, the temperature was held for an additional hour at 80° C, during which a second stirred monomer emulsion consisting of 15 pbw of Rhodapex EST30, 378 pbw of deionized water, 377 pbw of methyl methacrylate, 327 pbw of butyl acrylate, 7 pbw of allyl methacrylate and a solution of 13 pbw of AMP (2-amino-2-methyl-1-propanol, 90 wt. % aqueous solution) in 98 pbw of deionized water were separately prepared. The AMP solution was added slowly to the reaction mixture and then, a solution of 1.1 pbw of APS in 70 pbw of deionized water was slowly added. The second monomer emulsion was then added within 90 minutes to the reactor content. After the addition was complete, the temperature was held at 80° C for an additional hour. The aqueous binder latex obtained was then cooled to room temperature.

### Example 2 (Preparation of an Aqueous Polyurethane Urea Resin Dispersion)

23.96 pbw of a polyesterdiol having a hydroxyl number of 112 mg of KOH/g (produced from hexanediol and a 2:1 molar mixture of adipic acid and isophthalic acid), 1.31 pbw of dimethylolpropionic acid and 1.04 pbw of triethylamine were mixed with 0.33 pbw of ethylene glycol monobutyl ether and 2.99 pbw of acetone in a flask equipped with stirrer and reflux condenser. After heating the mixture to 50° C, 9.40 pbw of isophorone diisocyanate were added and the mixture was stirred at 50° C until an NCO number between 2.2 and 1.9% was obtained. 54.52 pbw of deionized water were then added to form an aqueous dispersion, after which 6.45 pbw of a 6.25 wt. % aqueous solution of ethylenediamine were added at 40° C. The temperature was then raised back up to 50° C and this temperature was maintained for 2 hours. After cooling an aqueous polyurethane urea resin dispersion with 35 wt. % solids was obtained.

### Example 3 (Preparation of a Solution of a Carboxyl-Functional Polyurethane)

412.5 g dicyclohexylmethane diisocyanate, 180 g 12-hydroxystearic acid, 180 g dimethylolpropionic acid and 600 g methyl ethyl ketone were introduced into a flask equipped with stirrer, thermometer and reflux condenser. The mixture was heated to 60° C and stirred for 30 minutes. Thereafter the reaction mixture was heated to 70° C and stirred for further 30 minutes. Then the reaction mixture was heated to reflux while stirring, until the NCO content was <0.4 wt. %. After cooling the contents of the flask were diluted by addition of 127.5 g methyl ethyl ketone.

### Example 4 (Preparation of a Polyester Polyol)

375 g 1,6-hexanediol, 118 g trimethylolpropane, 389 g isophthalic acid and 118 g adipic acid were introduced into a flask equipped with stirrer, thermometer, column and distillation bridge. The contents were condensed while water of condensation was distilled off. The condensation was stopped by cooling to 80° C, after the carboxyl number of the reaction mixture had reached 10 mg KOH/g.

### Example 5 (Preparation of a Polyester Resin, i.e., an Aqueous Dispersion of a Urethanized Polyester)

At 80° C, 451 g of the product of Example 3 were added to the polyester polyol of Example 4 and the reaction mixture was heated to 160° C while distilling off the methyl ethyl ketone. Esterification was carried out until a carboxyl number of 18 mg KOH/g was achieved. After cooling to 100° C, 78 g butyl diglycol were added and the contents of the flask were neutralized. To this end 25 g DMEA (dimethylethanolamine) were homogeneously mixed in and the contents of the flask were cooled to 75° C. Deionized water was added portionwise to produce a 42 wt. % aqueous urethanized polyester binder dispersion.

### Example 6 (Preparation of an Aqueous Dispersion of a Urethanized Polyester/(Meth)Acryl Copolymer Hybrid Binder)

32 pbw of the aqueous dispersion of the urethanized polyester of Example 5 and 38.7 pbw of deionized water were heated to 85° C and then a solution of 0.1 pbw of APS in 6 pbw of deionized water was added. Thereafter a mixture of 6.5 pbw of tert.-butyl acrylate, 12 pbw of butyl acrylate and 4.7 pbw of methyl methacrylate was apportioned over a period of 4 hours at 85° C and, once apportionment was complete, the temperature was maintained at 85° C for a further 3 hours.

### Example 7a and Comparative Example 7b

Grey-metallic colored waterborne coats according to Example 7a and Example 7b were prepared by mixing the constituents listed in Table 1. Proportions are in pbw.

**Table 1: Preparation of Example 7a and comparative Example 7b**

| **Component** | **Example 7a** | **Example 7b** |
|---|---|---|
| Butoxy ethanol | 7 | 7 |
| Aluminum pigment⁽¹⁾ | 5 | 5 |
| Aqueous polyurethane urea resin dispersion of Example 2 | 4 | 4 |
| Deionized water | 12 | 12 |
| Aqueous polyurethane urea resin dispersion of Example 2 | 11 | 15 |
| Aqueous binder latex of Example 1 | 8 | 10 |
| Defoamer⁽²⁾ | 1.5 | 1.5 |
| Melamine MF900⁽³⁾ | 1.5 | 1.5 |
| Carbon Black Dispersion⁽⁴⁾ | 3.1 | 3.1 |
| Layered silicate composition⁽⁵⁾ | 7 | 7 |
| Deionized water | 20 | 20 |
| Solvent mineral spirit | 2 | 2 |
| Thickener⁽⁶⁾ | 4.9 | 4.9 |
| DMEA, 10 wt. % solution in water | 2.5 | 2.5 |
| Deionized water | 4.5 | 4.5 |
| Aqueous dispersion of a urethanized polyester/(meth)acryl copolymer hybrid binder of Example 6 | 6 | 0 |
| (1) STAPA ^{®} HYDROLAN 2156 No. 55900/G from Eckart | | |
| (2) SURFYNOL ^{®} 104 (50 wt. % in dipropylene glycol methylether) from Air Products. | | |
| (3) Melamine resin from Surface Specialties. | | |
| (4) Mixture of 16 pbw carbon black, 13 pbw of a nonionic surfactant SOLSPERSE ^{®} 27000 from Lubrizol, 22 pbw AMP and 48 pbw deionized water, 1 pbw of defoamer1) | | |
| (5) Mixture of 3 pbw OPTIGEL ^{®} SH from Südchemie, 3 pbw polypropylene glycol 900 and 94 pbw of deionized water. | | |
| (6) Mixture of 33 pbw VISCALEX ^{®} HV 30 from Allied Colloids, 2.5 pbw DMEA and 64.5 pbw of deionized water. | | |

**Table 2: Properties of Example 7a and comparative Example 7b**

| **Property** | **Example 7a** | **Example 7b** |
|---|---|---|
| Visual Appearance and Initial Brightness L* [units]⁽⁷⁾ | Fine metallic effect | Relatively coarse metallic effect |
| | L* = 87.5 units | L* = 95 units |
| Visual Appearance and Brightness after 4 days shaking L* [units]⁽⁸⁾ | Fine metallic effect | Metallic effect with increased coarseness |
| | L* = 87.4 units | L* = 99 units |
| Visual Appearance after 4 days shaking⁽⁹⁾ | Coating material appears unchanged | Coating material shows signs of instability; some separation of aluminum pigment adhered at inner bottle surface |
| (7) The water-borne base coats were each applied to steel test panels provided with a precoating consisting of EDC primer and primer surfacer in 14 µm dry film thickness. After flashing-off for 5 minutes at 20° C and additional 5 minutes at 80° C, the test panels were each spray coated with a commercial two-component polyurethane clear coat in 40 µm dry film thickness and after flashing-off for 5 minutes at 20° C baked for 20 minutes at 140° C object temperature. The metallic effect of the multi-layer coating was visually assessed and the brightness L* (according to CIEL*a*b*, DIN 6174) at an illumination angle of 45 degrees to the perpendicular and an observation angle of 15 degrees to the specular was measured with the instrument X-Rite MA 68 sold by the firm X-Rite Incorporated, Grandeville, Michigan, U.S.A. | | |
| (8) (9) The water-borne base coats were filled into plastic bottles which were then shaken for 4 days at 20° C using a KS260 device of IKA ^{®} Werke GmbH & Co. KG. | | |

The wet samples were visually assessed and the test described under (7) was carried out.

Exemplary waterborne top coat compositions are formed from polyester resins. Exemplary polyester resins are disclosed in US Pat. No. 7,960,482 which is hereby incorporated by reference.

### Example 8

Example 8 illustrates the manufacture of a polyester resin according to the following ingredients:

**Table 3: Preparation of Example 8**

| **Component A** | **Wt.%** | **Component B** | **Wt.%** |
|---|---|---|---|
| Crylcoat 2432 (COOH-- polyester, acid value 20) | 60.5 | Crylcoat 2514 (COOH-- polyester, acid value: 47) | 43.0 |
| Araldite PT 912 (mixture of TML and DGT) | 4.0 | COOH--polyester, acid value: 28) | 13.5 |
| Resiflow PV88 (flow agent) | 1.0 | Araldite PT 912 | 7.4 |
| 2-Phenyl imidazoline | 0.9 | Resiflow PV88: flow agent | 1.0 |
| Benzoin | 0.5 | Benzoin | 0.5 |
| TiPure R706: Titanium dioxide | 32.5 | Accelerator DT3126 in (quaternary ammonium salt) | 2.2 |
| Carbon black in 1% mixture with barium sulfate | 0.6 | TiPure R706 | 31.8 |
| | | Carbon black in 1% mixture with barium sulfate | 0.6 |

The ingredients of each component (A) and of each component (B) are separately mixed together and separately extruded in an extruder PR 46 (firm: Buss AG) at 120 °C. The melt-mixed formulation is cooled and the resulted material is separately ground to a D50 value of 35 µm particle size distribution.

The final composition may be obtained by mixing 50 wt % of component A) and 50 wt % of component B) to ensure homogeneous mixing. The final composition may be applied to 1-mm thick steel sheet using the coil coating technology and cured by medium wave infrared electric emitters at a temperature in the range of 200 °C to 255 °C. The total heating time is 105 seconds, and the cooling time is 30 seconds by cool air. The resulting film thickness is 70 µm.

### Acrylic Resins

Exemplary waterborne top coat compositions are formed from acrylic resins. Exemplary acrylic resins are disclosed in PCT Application No. WO/1995032228A1, which is hereby incorporated by reference.

### Example 9a and 9b

Examples 9a and 9b illustrate the use of a Co (II) chelate in the synthesis of the following macromonomers. The chelate is BF₂ bridged Co (II) (1,2-diphenyl-1,2-dioxoiminoethane)₂ (H₂O)₂ chelate, as described in example 44B of EP 0199436.

For Example 9a, Mixture 1 (20 wt.% Methyl ethyl ketone) was heated at reflux (± 80° C) in a reaction vessel that was kept under nitrogen. Mixture 2 (30 wt.% Methyl methacrylate, 20 wt.% Methacrylic acid, and 6 wt.% Methyl ethyl ketone) was added over 4 hours. Simultaneously with the addition of Mixture 2, Mixture 3 (4 wt.% Methyl ethyl ketone, 0.006 wt.% Co II chelate, and 0.35 wt.% Vazo@ 67 initiator) was added over 90 minutes followed immediately by addition of Mixture 4 (10 wt.% Methyl ethyl ketone, 0.003 wt.% Co II chelate, and 0.3 wt.% Vazo^{®} 52 initiator). Mixture 5 (1.23 wt.% Methyl ethyl ketone) was added, for rinsing, followed by a 5 minute hold. Afterwards, Mixture 6 (0.1 wt.% Vazo@ 52 initiator, 1.9 wt.% Methyl ethyl ketone, and 1 wt.% Methyl ethyl ketone (Rinse)) was added over 30 min. followed by another rinsing step and held for 60 minutes. Final thinning included 5.111 wt.% of methyl ethyl ketone. During the total process, the temperature was kept at reflux.

Example 9a results in a macromer with a solids content of 51.8 wt.%, a Gardner-Holdt viscosity of Z3, an Acid Value of 252, a Number Averaged Molecular Weight, Mn of 2300, and a Weight Averaged Molecular Weight, Mw of 4800.

For Example 9b, Mixture 1 (20 wt.% Methyl ethyl ketone) was heated at reflux (± 80° C) in a reaction vessel that was kept under nitrogen. Mixture 2 (26 wt.% Methyl methacrylate, 14 wt.% 2-Hydroxyethyl methacrylate, 10 wt.% Methacrylic acid, and 6 wt.% Methyl ethyl ketone) was added over 4 hours. Simultaneously with the addition of Mixture 2, Mixture 3 (4 wt.% Methyl ethyl ketone, 0.006 wt.% Co II chelate, and 0.35 wt.% Vazo@ 67 initiator) was added over 90 minutes followed immediately by addition of Mixture 4 (10 wt.% Methyl ethyl ketone, 0.003 wt.% Co II chelate, and 0.3 wt.% Vazo@ 52 initiator). Mixture 5 (1.23 wt.% Methyl ethyl ketone) was added, for rinsing, followed by a 5 minute hold. Afterwards, Mixture 6 (0.1 wt.% Vazo@ 52 initiator, 1.9 wt.% Methyl ethyl ketone, and 1 wt.% Methyl ethyl ketone (Rinse)) was added over 30 min. followed by another rinsing step and held for 60 minutes. Final thinning included 5.111 wt.% of methyl ethyl ketone. During the total process, the temperature was kept at reflux.

Example 9b results in a macromer with a solids content of 50.2 wt.%, a Gardner-Holdt viscosity of I - 14, an Acid Value of 143, a Number Averaged Molecular Weight, Mn of 1500, and a Weight Averaged Molecular Weight, Mw of 3000.

### Example 10

Example 10 (preparation of an acrylic resin, i.e., graft acrylic copolymer dispersion, consisting, by weight, of 92.5% backbone made from styrene / n-butyl methacrylate / butyl acrylate / 2-hydroxyethyl acrylate (in the weight ratio 20 / 43.5 / 7 / 22) and 7.5% macromonomer (from Example 9a) made from methyl methacrylate/ methacrylic acid (in the weight ratio 4.5 / 3).

**TABLE 4: Preparation of the graft acrylic copolymer of Example 10 as formed in solution before dispersion in water as follows.**

| Part 1 | Parts by Weight |
|---|---|
| n-Butylglycolether | 11.2 |
| n-Butyl diethyleneglycol ether | 3.7 |
| Macromonomer of Example 9a | 11.25 |

| Part 2 | Parts by Weight |
|---|---|
| Styrene | 15.0 |
| n-Butyl methacrylate | 32.63 |
| n-Butyl acrylate | 5.25 |
| 2-Hydroxyethyl acrylate | 16.50 |
| t-Butylperacetate | 3.0 |
| n-Butylglycolether | 3.0 |
| Isopropyl alcohol | 0.3 |

| Part 3 | Parts by Weight |
|---|---|
| n-Butylglycolether | 1 |

| Part 4 | Parts by Weight |
|---|---|
| t-Butylperacetate | 0.3 |
| n-Butylglycolether | 1.7 |

| Part 5 | Parts by Weight |
|---|---|
| n- Butylglycolether | 1.0 |
| Total | 105.83 |
| | -105.83 |
| Yield | 100.00 |

Part 1 was heated and low boiling solvent stripped off until a reflux of 137-139° C was obtained. Part 2 was then added over 3 hours at a reflux of 137-139°C. Part 3 was used for rinsing and Part 4 then added over 30 min. Again, the reactor inlet was rinsed and the contents held at reflux for 30 minutes. Finally, 5.83 parts were stripped off. The reactor contents were then cooled to 60-70°C and neutralized with dimethyethanolamine in the amount of 2.30 parts. The graft copolymer was dispersed in deionized water in the amount of 85.20 parts and the pH adjusted to 85.20 (total 187.5 parts). The graft copolymer product exhibited the following characteristics: Solids 35.6%; Viscosity = 10.000 cps; pH 9; AN 23.6; MN 6400; MW 18000; and Particle Size 70 nm.

### Example 11

Example 11 illustrates the preparation of an acrylic-polyester hybrid, i.e., a urethanized polyester/(meth)acryl copolymer hybrid binder.

**TABLE 5: Monomer solution utilized in the preparation of the urethanized polyester/(meth)acryl copolymer hybrid binder of Example 11.**

| Component | Monomer feed (grams) |
|---|---|
| Styrene | 353.30 |
| 2-Ethyl hexyl acrylate (EHA) | 125.92 |
| Methyl methacrylate (MMA) | 492.99 |
| Glycidyl methacrylate (GMA) | 89.56 |

In Example 11, a five-liter reactor fitted with a condenser, mechanical stirrer and thermometer was filled with 592.48 grams of deionized water, 1943.00 grams of an aqueous dispersion of a urethanized polyester (40 wt.%, Example 5). The reaction mixture was heated to 75°C. While stirring at 75°C, a solution of 8.20 grams of 2,2'-azobis[2-methyl-N-(2-hydroxyethyl)propionamide] (Fujifilm Wako Pure Chemical Corporation) in 42.57 grams of water was added to the reactor over 60 minutes at 75°C. After the initiator dosing was complete, the reaction temperature was raised to 84°C and a monomer solution (Table 5) was then fed to the reactor at 84°C over 120 minutes. After the dosing of monomers solution was complete, the reaction was held at 84°C for another 120 minutes. The reactor was then cooled to ambient temperature and the product was the filtered over 80 µm mesh.

### Examples 12a and 12b

Example 12a provides for the preparation of a paint including the urethanized polyester/(meth)acryl copolymer hybrid binder described herein, and Example 12b provides a comparative paint that does not include the urethanized polyester/(meth)acryl copolymer hybrid binder.

**Table 6: Preparation of Waterborne Top Coat Composition, e.g., Paint, according to Example 12a and comparative Example 12b**

| **Component** | | **Example 12a** | **Example 12b** |
|---|---|---|---|
| Urethanized polyester/(meth)acryl copolymer hybrid binder (Acrylic-PE Hybrid) | | 144.07 | - |
| Acrylic resin of Example 10 and having 41.2% total solids. | | 169.04 | 236.51 |
| Deionized Water | | 5.25 | 73.42 |
| Dipropylene Glycol Monobutyl Ether | | 9.15 | - |
| Dipropylene Glycol Methyl Ether | | 27.23 | 6.99 |
| Polyether Modified Polydimethylsiloxane (BYK^{®} -333) | | 0.35 | 0.37 |
| Liquid Bis (1, 2, 2, 6, 6-pentamethyl-4-piperidyl) sebacate and Methyl 1, 2, 2, 6, 6-pentamethyl-4-piperidyl sebacate (TINUVIN^{®} 292) | | 3.71 | 1.86 |
| Heavy Naptha | | - | 8.82 |
| Propylene Glycol Methyl Ether | | - | 6.99 |
| Polyether modified polysiloxane (BYK^{®} -347) | | 3.62 | 2.39 |
| Silicone-free surface-active, low-molecular-weight polymers (BYKETOL^{®}-AQ) | | 5.41 | - |
| Methylated High Imino Melamine Crosslinker Supplied in Iso-butanol (CYMEL^{®} 327) | | 48.47 | 41.54 |
| Polyester Resin #1 of Example 5 and having 43.7% total solids | | - | 31.50 |
| Polyester Resin #2 of Example 8 and having 94.5% total solids | | 16.90 | 25.22 |
| Dimethylethanol Amine | | - | 3.08 |
| Orange Tint Paste #1⁽²⁾ | | 7.23 | 6.64 |
| Orange Tint Paste #2⁽³⁾ | | 47.82 | 43.88 |
| Red Tint Paste #1⁽⁴⁾ | | 10.61 | 9.73 |
| Red Tint Paste #2⁽⁵⁾ | | 0.60 | 0.55 |
| Red Tint Paste #3⁽⁶⁾ | | 0.54 | 0.50 |
| TOTAL | | 500.00 | 500.00 |
| | **% Total Solids Before Application⁽¹⁾** | 43.6 | 41.9 |
| (1) Total solids were measured using a 'Computrac MAX 4000x1' (Ametek of Brookfield, US) and following the procedure for ASTM D7232-06. (2) Orange Tint Paste #1 consists of 56.8% Paliotan Orange L 2935 dispersed with 6.4% acrylic polymer blend and 63.5% total solids. (3) Orange Tint Paste #2 consists of 45.0% Benzimidazolone Orange dispersed with 3.5% acrylic polymer blend and 48.7% total solids. (4) Red Tint Paste #1 consists of 50.0% C.I. Pigment Red 254 dispersed with 3.9% acrylic polymer blend and 51.1% total solids. (5) Red Tint Paste #2 consists of 20.0% C.I. Perylene Red dispersed with 2.3% acrylic polymer blend and 24.0% total solids. (6) Red Tint Paste #3 consists of 55.0% C.I. Iron Oxide dispersed with 2.9% acrylic polymer blend and 58.5% total solids. | | | |

**Table 6: Attributes of Example 12a and comparative Example 12b**

| **Attribute** | **Surface coated by composition of Example 12a** | **Surface coated by composition of Example 12b** |
|---|---|---|
| Haze⁽¹⁾ (Lower value is better, i.e., reduced haze) | 21.4 | 44.6 |
| Gloss⁽¹⁾ (Higher value is better, i.e., increased gloss) | 91.2 | 87.8 |
| Longwave surface texture⁽²⁾ (Lower value is better, i.e., lower variance of longwave signal amplitude) | 3.1 | 6.3 |
| Shortwave surface texture⁽²⁾ (Lower value is better, i.e., lower variance of shortwave signal amplitude) | 4.6 | 9.6 |
| (1) Haze and gloss were measured with a 'Rhopoint IQ 20/60/85 Gloss Haze DOI Meter' (Rhopoint Instruments, UK) following the procedure for ASTM D523. | | |
| (2) Longwave and shortwave were measured with a 'BYK Wavescan' (BYK, DE), following the procedure and analysis provided by BYK. | | |

As can be seen from Table 6, the waterborne top coat composition of Example 12a, including the urethanized polyester/(meth)acryl copolymer hybrid binder provides a substantial improvement in haze reduction as well as an improvement in gloss, as compared to the comparative composition of Example 12b. Further, the paint of Example 12a has improved (lower) variance of longwave and shortwave signal amplitude as compared to the comparative paint of Example 12b.

As compared to conventional top coat compositions, a top coat composition formed with the above-described solids content and binder solids comprising from about 1 to about 40 wt.% of the described urethanized polyester/(meth)acryl copolymer hybrid binder exhibits a reduction in haze and a reduction in sagging upon application to a surface or article, such as an automotive body part.

It is noted that the top coat compositions described herein as suitable as the top coat in a multi-layer coating. Therefore, the top coat compositions are designed to form a top coat layer having desired characteristics. An exemplary method for forming a top coat on a substrate includes spray-applying a waterborne top coat composition on the substrate to form a top coat layer, wherein the waterborne top coat composition comprises water, pigment(s) and resin solids, the resin solids comprising about 60 to 100 wt.% of binder solids and 0 to about 40 wt.% of crosslinker solids, the binder solids comprising about 1 to about 40 wt.% of a urethanized polyester/(meth)acryl copolymer hybrid binder having a hydroxyl number of about 30 to about 200 mg KOH/g and a carboxyl number of about 8 to about 50 mg KOH/g, and about 60 to about 99 wt.% of one or more additional binders, the sum of the respective wt.% in each case equaling 100 wt.%; and curing the top coat layer to form a cured top coat. The method may include providing an automotive body or an automotive part as the substrate. Further, in the method spray-applying may be performed by electrostatically-assisted high speed rotary atomization. In the method, spray-applying the waterborne top coat composition may include spray-applying the waterborne top coat composition such that the cured top coat has a dry thickness of from about 7 to about 40 µm. In the method, curing may include subjecting the top coat layer to a temperature of from about 40 to about 185°C for from about 15 to about 45 minutes.

No additional layer is applied and cured over the top coat. Thus, the method may consist of forming a base coat or base coats and the top coat without forming any additional coat over of the top coat. Thus, the top coat does not undergo any additional curing steps to cure overlying layers.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

## Claims

1. A waterborne top coat composition comprising:
water;
pigment(s); and
resin solids;
wherein the resin solids comprise from about 60 to 100 wt.% of binder solids and from 0 to about 40 wt.% of crosslinker solids;
wherein the binder solids comprise from about 1 to about 40 wt.% of a urethanized polyester/(meth)acryl copolymer hybrid binder having a hydroxyl number of about 30 to about 200 mg KOH/g and a carboxyl number of about 8 to about 50 mg KOH/g, and from about 60 to about 99 wt.% of one or more additional binders, the sum of the respective wt.% in each case equaling 100 wt.%.

2. The waterborne top coat composition of claim 1, wherein the urethanized polyester/(meth)acryl copolymer hybrid binder is obtained by free-radical copolymerization of free-radically copolymerizable olefinically unsaturated monomers comprising (meth)acryl compounds in the presence of an aqueous dispersion of a urethanized polyester, wherein the urethanized polyester is an esterification product made of a polyurethane resin with a carboxyl number of about 50 to about 200 mg KOH/g and a polyester polyol with a hydroxyl number of about 70 to about 300 mg KOH/g.

3. The waterborne top coat composition of claim 2, wherein the polyurethane resin comprises a linear polyurethane resin with terminal carboxyl groups corresponding to a carboxyl number of about 50 to about 200 mg KOH/g.

4. The waterborne top coat composition of claim 2, wherein the polyurethane resin comprises a linear polyurethane resin with terminal and lateral carboxyl groups corresponding to a total carboxyl number of about 50 to about 200 mg KOH/g.

5. The waterborne top coat composition of claim 2, wherein the polyester polyol comprises a branched polyester polyol.

6. The waterborne top coat composition of claim 2, wherein a proportion by weight of (meth)acryl compounds among the free-radically copolymerizable olefinically unsaturated monomers is in the range of about 50 to 100 wt.%, wherein the wt.% is based on a total weight of the free-radically copolymerizable olefinically unsaturated monomers.

7. The waterborne top coat composition of claim 1, wherein the waterborne top coat composition is comprised of from about 1 to about 30 wt.% of the pigment(s), based on a total weight of the waterborne top coat composition.

8. The waterborne top coat composition of claim 1, wherein the waterborne top coat composition has a total solids content of from about 40 to about 50 wt.% , based on a total weight of the waterborne top coat composition.

9. The waterborne top coat composition of claim 1, wherein a content of the resin solids is from about 10 to about 40 wt.%, based on a total weight of the waterborne top coat composition.

10. A method for forming a top coat on a substrate, the method comprising:
spray-applying a waterborne top coat composition on the substrate to form a top coat layer, wherein the waterborne top coat composition comprises water, pigment(s) and resin solids, the resin solids comprising about 60 to 100 wt.% of binder solids and 0 to about 40 wt.% of crosslinker solids, the binder solids comprising about 1 to about 40 wt.% of a urethanized polyester/(meth)acryl copolymer hybrid binder having a hydroxyl number of about 30 to about 200 mg KOH/g and a carboxyl number of about 8 to about 50 mg KOH/g, and about 60 to about 99 wt.% of one or more additional binders, the sum of the respective wt.% in each case equaling 100 wt.%; and
curing the top coat layer to form a cured top coat.

11. The method of claim 10, further comprising providing an automotive body or an automotive part as the substrate.

12. The method of claim 10, wherein spray-applying is performed by electrostatically-assisted high speed rotary atomization.

13. The method of claim 10, wherein spray-applying the waterborne top coat composition comprises spray-applying the waterborne top coat composition such that the cured top coat has a dry thickness of from about 7 to about 40 µm.

14. The method of claim 10, wherein curing comprises subjecting the top coat layer to a temperature of from about 40 to about 185°C for from about 15 to about 45 minutes.

15. The method of claim 10, wherein spray-applying the waterborne top coat composition comprises spray-applying the waterborne top coat composition of which the urethanized polyester/(meth)acryl copolymer hybrid binder is obtained by free-radical copolymerization of free-radically copolymerizable olefinically unsaturated monomers comprising (meth)acryl compounds in the presence of an aqueous dispersion of a urethanized polyester, wherein the urethanized polyester is an esterification product made of a polyurethane resin with a carboxyl number of about 50 to about 200 mg KOH/g and a polyester polyol with a hydroxyl number of about 70 to about 300 mg KOH/g.
